# FASCICULE DE BREVET EUROPEEN

(11) **EP 0 919 046 B1**
(45) Date de publication et mention de la délivrance du brevet: **16.01.2002**
(21) Numéro de dépôt: 97935627.6
(22) Date de dépôt: 25.07.1997
(51) Int. Cl.: G07F 7/10

(54) **INTERFACE HOMME-MACHINE POUR LECTEUR DE CARTE A PUCE**
MENSCH-MASCHINE SCHNITTSTELLE FÜR KARTENLESER
MAN-MACHINE INTERFACE FOR A SMART CARD READER

(30) Priorité: 30.07.1996 FR 9609572
(43) Date de publication de la demande: 02.06.1999
(73) Titulaire: OBERTHUR CARD SYSTEMS SA, 75017 Paris (FR)
(72) Inventeur: DEVAUX, François, Thomson-CSF S.C.P.I., F-94117 Arcueil Cedex (FR); PERROT, Daniel, Thomson-CSF S.C.P.I., F-94117 Arcueil Cedex (FR)
(74) Mandataire: Beylot, Jacques
(86) Numéro de dépôt international: FR9701392
(87) Numéro de publication internationale: WO9805009

(56) Documents cités:
- EP-A- 0 614 302
- EP-A- 0 717 381
- FR-A- 2 696 888

## Description

On désigne par carte à puce, les cartes, en général du format d'une carte de crédit, mais également les jetons munis d'un microcircuit électronique, à base de mémoires et d'un microcontrôleur agencés pour permettre le déroulement d'une transaction, bancaire, santé ou autre appelée par la suite application.

Les lecteurs de carte à puce connus sont pourvus d'un système assurant une liaison d'échange d'informations avec une carte à puce, soit au moyen d'un connecteur électrique à broches multiples, soit au moyen d'une antenne capacitive ou inductive. Ils sont essentiellement de deux types : soit autonomes, soit transparents.

Les lecteurs autonomes sont ceux qui se suffisent à eux-mêmes. Ils comportent des éléments de communication suffisants pour permettre à une personne de suivre et de comprendre le déroulement d'une application: clavier et afficheurs qui sont gérés, de même que la liaison d'échange d'informations avec la carte à puce, par un microcontrôleur propre au lecteur doté d'un programme spécifique à l'application envisagée.

Les lecteurs transparents de carte à puce servent d'accès pour la carte à puce, à un système informatique programmé spécialement pour l'application envisagée. Ils se comportent vis à vis du système informatique comme un simple port d'entrée-sortie spécialisé pour une carte à puce.

La plupart des lecteurs de carte à puce utilisent la carte à puce comme un simple support de données sécurisées ou pour des fonctions de sécurité, voir de cryptographie qu'elle peut offrir. Ils transmettent à la carte à puce des instructions mises sous une forme respectant un protocole spécifique d'échange d'informations qui est souvent celui défini par la norme ISO 7816-3, et gèrent la réponse de la carte à puce qu'ils traitent eux-mêmes s'ils sont autonomes ou qu'ils retournent au système informatique auquel ils sont raccordés s'ils sont transparents.

L'intelligence de l'application est alors située, soit au niveau du lecteur, soit à celui du système informatique associé au lecteur. Cela a pour inconvénient de nécessiter une spécialisation du lecteur ou du système informatique associé en fonction du type d'application. Ainsi, si l'on veut changer le type d'application, il ne suffit pas de changer la programmation de la carte à puce ; il faut également changer la programmation du lecteur s'il est autonome, ou celle du système informatique associé si le lecteur est transparent. Cela est un obstacle au développement des applications des cartes à puce.

Pour éviter cet inconvénient, il a été proposé, notamment dans la demande européenne de brevet EP 0 717 381, de stocker au niveau de la carte à puce le programme de gestion d'une application et de doter le lecteur de cartes à puce de moyens pour importer dans le lecteur, depuis la carte à puce lue, un programme de gestion d'une application avant de le mettre en oeuvre.

Il a été aussi proposé de ramener l'intelligence de l'application au niveau de la carte à puce elle-même qui, soit mémorise le programme de gestion de l'application dans un langage de programmation évolué, soit le reçoit du lecteur toujours dans un langage de programmation évolué, cela dans un but de sécurisation, et l'exécute en faisant appel à son propre microcontrôleur et aux seules capacités d'affichage et de saisie d'informations du lecteur qui devient banalisé.

Cependant, on se heurte rapidement, aux capacités limitées de traitement et de mémorisation d'une carte à puce ainsi qu'au faible débit de la liaison de transmission reliant la carte à puce à son lecteur pour les échanges d'informations qui font que l'importation du programme de gestion d'une application depuis une carte à puce ou la gestion en temps réel de l'affichage du lecteur depuis la carte à puce au cours du déroulement d'une application aboutit dans le lecteur à un affichage sommaire ne facilitant pas autant qu'il serait souhaitable le dialogue avec l'utilisateur d'une application.

Il est notamment difficile de faire exécuter par le microcontrôleur d'une carte à puce un programme de gestion d'application comportant des travaux d'affichage et surtout d'animation sophistiqués alors que ces travaux sont des tâches secondaires que l'on retrouve de plus en plus dans les applications les plus diverses et que les règles modernes de définition des interfaces homme-machine alourdissent chaque jour.

La présente invention a pour but de lutter contre l'inconvénient précité et de soulager le travail logiciel d'une carte à puce au cours du déroulement d'une application, en déportant dans le lecteur, des tâches logicielles non spécifiques à un type particulier d'application afin d'augmenter la capacité d'une carte à puce à supporter des applications de tailles de plus en plus importantes.

Elle a pour objet, un lecteur de cartes à puce à interface homme-machine améliorée comportant des moyens de raccordement avec une carte à puce, des moyens de gestion, à l'initiative du lecteur, d'échanges d'informations avec une carte à puce raccordée, des moyens d'affichage et de saisie d'informations et un circuit à microcontrôleur et mémoire fonctionnant en logique programmée et assurant l'établissement et la gestion d'une liaison de transmission avec la carte à puce raccordée, la gestion des moyens d'affichage et de saisie d'informations, le traitement des informations : données et/ou instructions reçues de la carte à puce raccordée et l'élaboration d'informations : données, instructions ou comptes rendus à destination de la carte à puce raccordée. Ce lecteur de carte à puce est remarquable en ce que son circuit à microcontrôleur et mémoire est pourvu d'un système d'exploitation multitâche, et renferme en mémoire un emplacement pour une bibliothèque de programmes qui définissent des objets visuels et/ou sonores, ou autres, s'affichant sur les moyens d'affichages et qui sont exécutés par le circuit à microcontrôleur et mémoire dudit lecteur sous le contrôle de son système d'exploitation, en arrière plan, sur un appel en provenance d'un programme de gestion de transaction déroulé par la carte à puce raccordée.

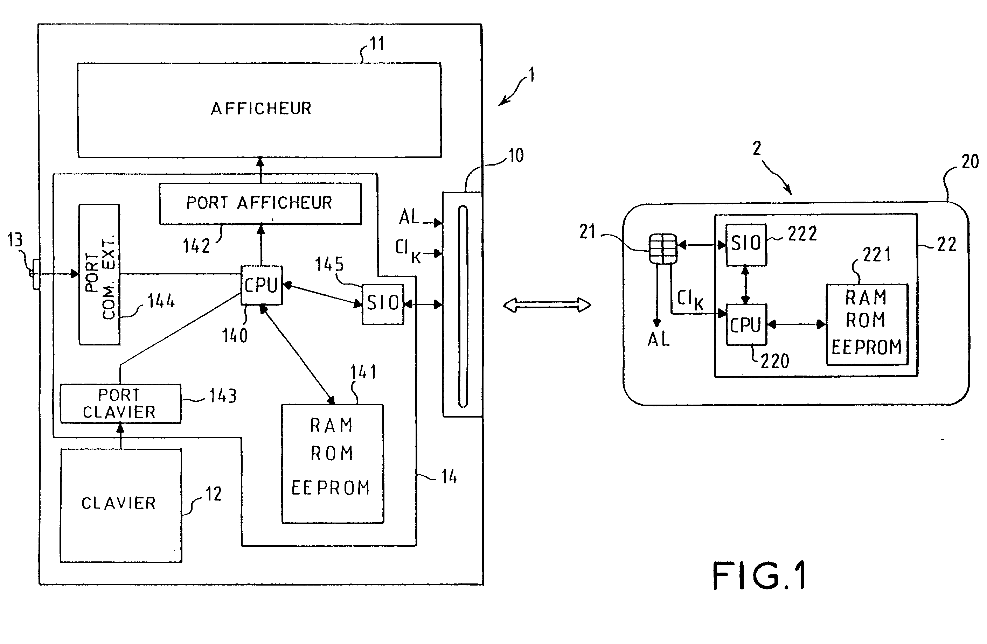

D'autres caractéristiques et avantages de l'invention ressortiront de la description ci-après d'un mode de réalisation de l'invention donné à titre d'exemple. Cette description sera faite en regard du dessin dans lequel la figure unique illustre, de manière schématique, l'architecture d'un lecteur de carte à puce selon l'invention et d'une carte à puce.

On distingue sur la figure un lecteur 1 de carte à puce en présence d'une carte à puce 2.

La carte à puce 2 comporte une carte support plastifiée 20 pourvue d'un ensemble de contacts électriques 21 raccordés à un microcircuit électronique 22 enterré sous les contacts. Le microcircuit 22 renferme principalement, un microcontrôleur (CPU) 220 en liaison avec de la mémoire 221 en partie vive (RAM) et en partie permanente, à la fois de type morte non réinscriptible (ROM) et de type morte réinscriptible (EEPROM) destinée au stockage de tout ou partie des données et programmes nécessaires à une application, et avec un port série d'entrée-sortie (SIO) 222 menant à l'un des contacts et destiné à l'échange d'informations avec un lecteur. L'ensemble de contacts électriques 21 permet de fournir, au microcircuit électronique 22 de la carte, depuis un lecteur, l'alimentation électrique nécessaire à son fonctionnement AI, et des signaux auxiliaires comme un signal d'horloge Clₖ. II permet également de faire parvenir à un lecteur un signal d'acquittement de remise à zéro en provenance du microcircuit microcircuit électronique de la carte et d'échanger des informations entre la carte et un lecteur.

Le lecteur 1 de carte à puce renferme un connecteur de carte à puce 10, un écran d'affichage 11, un clavier 12, un connecteur de communication extérieur 13 et un circuit électronique de contrôle et de gestion à logique programmée 14. Le circuit électronique de contrôle et de gestion 14 comporte principalement, un microcontrôleur (CPU) 140 en liaison avec de la mémoire 141 en partie vive (RAM) et en partie permanente, à la fois de type morte non réinscriptible (ROM) et de type morte réinscriptible (EEPROM), et un ensemble de ports d'entrée-sortie dont un port d'afficheur 142, un port de clavier 143, un port de communication externe 144 et un port série (SIO) 145 raccordé au connecteur de carte à puce 10.

La carte à puce 2 et le lecteur 1 de carte à puce comportent en mémoire (ROM) 221, respectivement 141 des systèmes d'exploitation spécifiques. Le système d'exploitation spécifique de la carte à puce 2 est exécuté par le microcontrôleur 220 de la carte à puce dès que celui-ci reçoit une alimentation électrique de l'extérieur. Il permet au microcontrôleur 220 de la carte à puce 2 de gérer d'une part la mémoire 221 de la carte à puce 2 de manière sécurisée et d'autre part, le port série d'entrée-sortie (SIO) 220 de la carte à puce 2 accessible depuis les contacts électriques 21, en conformité avec un protocole définissant les modalités d'un échange d'informations avec le lecteur 1 de carte à puce tel que par exemple celui défini dans la norme ISO 7816-3. Le système d'exploitation spécifique du lecteur 1 de carte à puce est exécuté par le microcontrôleur 140 du lecteur 1 de carte à puce dès sa mise sous tension. Il permet au microcontrôleur 140 du lecteur 1 de carte à puce de gérer la mémoire 141 et les différents ports d'entrée-sortie 142, 143, 144, 145 du lecteur 1 de carte à puce, la gestion du port série d'entrée-sortie 145 relié au connecteur de carte à puce 10 respectant le protocole d'échange d'informations adopté par la carte à puce 2.

Le programme de gestion d'application qui définit le déroulement de l'application de la carte à puce constitue une couche logique externe par rapport aux systèmes d'exploitation. Il est stocké ou importé soit dans la mémoire 141 du lecteur 1 de carte à puce, soit dans la mémoire 221 de la carte à puce 2. Lorsqu'il est stocké ou importé dans la mémoire 141 du lecteur 1 de carte à puce, il l'est en vu d'être exécuter par le microcontrôleur 140 du lecteur 1 de carte à puce, sous le contrôle du système d'exploitation du lecteur 1 de carte à puce. L'intelligence de l'application se situe alors au niveau du lecteur 1 de carte à puce, ce qui a pour inconvénient de le spécialisé en fonction d'applications qui doivent être prévues à l'avance. Lorsque le programme de l'application est stocké ou importé dans la mémoire 221 de la carte à puce 2, il l'est en vu d'être exécuter par le microcontrôleur 220 de la carte à puce 2, sous le contrôle du système d'exploitation de la carte à puce 2 qui utilise alors les facilités de communication avec l'extérieur procurées par le lecteur 1 de carte à puce pour mener à bien le dialogue avec l'utilisateur que lui impose l'application. L'intelligence de l'application se situe alors au niveau de la carte à puce 1 elle-même, ce qui a pour avantage de permettre une banalisation du lecteur de carte à puce en contrepartie d'une complexification des tâches du microcircuit électronique de la carte à puce 2.

Les microcircuits électroniques des cartes à puce subissent, du fait de leur encartage, des contraintes importantes qui limitent actuellement leur taille à 23 voir 25 mm². De ce fait, et compte tenu de l'état de l'art en matière de micro-électronique, il est difficile d'encarter des microcontrôleurs de plus de 8 kilooctets de mémoire EEPROM, ce qui limite grandement la complexité des programmes stockables dans une carte à puce.

Pour améliorer la compacité d'un programme et mettre son exécution à portée d'un microcircuit électronique aux performances limitées d'une carte à puce, il est avantageux d'utiliser dans la carte à puce un langage de programmation interprété. L'interprétation du programme de gestion d'une application dans la carte à puce a, entre autres, pour résultat des demandes de réalisation de tâches qui sont faites dans un langage de communication et dont certaines sont adressées au lecteur. On adapte alors les interpréteurs de commandes des systèmes d'exploitation de la carte à puce 2 et du lecteur 1 de carte à puce pour qu'ils reconnaissent les commandes de ce langage de communication interprété susceptibles de leur parvenir. Parmi les commandes du langage de communication interprété, il est avantageux de prévoir des ordres d'exécution de fonctions complexes qui intéressent les interfaces de communication avec l'extérieur du lecteur 1 de carte à puce sans être spécifiques d'une application et dont l'exécution peut être entièrement prise en charge par le lecteur 1 de carte à puce. Dans ces fonctions complexes, il en existe une catégorie particulièrement intéressante qui est celle concernant la création et l'animation d'objets visuels, sonores ou autres, Les fonctions de cette catégorie sont définies par des programmes particuliers dits programmes objets exécutés en arrière plan dans un environnement multitâche, à partir d'un appel éventuellement paramétré provenant du programme principal de gestion de l'application. Le lecteur 1 de carte à puce est alors doté d'un système d'exploitation multitâche et d'une bibliothèque de programmes objets soit résidants, soit importés dans sa mémoire 141.

La notion de programmes objets hébergés et exécutés par le lecteur de carte à puce, et lancés par la carte à puce permet de profiter de la capacité de la carte à puce de contrôler le déroulement d'une application et de celle du lecteur de carte à puce d'assurer, sous le contrôle de la carte à puce, un interface homme-machine acceptable.

Lors du déroulement d'une application, la carte à puce envoie au lecteur de carte à puce des commandes de création d'objets particuliers comme par exemple la présentation sur l'afficheur de menus d'attente ou d'animations. Ces objets, une fois créés, sont dotés d'existences propres qui sont gérées uniquement par le microcontrôleur du lecteur de carte à puce déroulant en arrière plan les programmes objets adéquats mais sur lesquelles la carte à puce peut intervenir à tout instant, par des commandes spécifiques comme des commandes de suppression.

Chaque traitement de la part du lecteur de carte à puce, que ce soit une création d'un objet ou un autre traitement, est décidé, au moment opportun du déroulement d'une application, par la carte à puce qui en spécifie les caractéristiques et en contrôle la bonne exécution. Le lecteur de carte à puce se contente d'exécuter les traitements correspondant aux commandes reçues de la carte à puce éventuellement paramétrées et de transmettre à la carte à puce des comptes rendus d'exécution.

Les objets qui peuvent être créés par le lecteur de carte à puce sont avantageusement des objets visuels présentés sur l'afficheur pour faciliter l'interface homme-machine, par exemple, une animation à l'écran signalant l'exécution en cours d'une tâche. Cette animation résulte de l'exécution en arrière plan d'un programme objet spécifique mis en action par l'interpréteur de commandes du système d'exploitation du lecteur de carte à puce dès réception, en provenance de la carte à puce, d'une commande adéquate accompagnées de paramètres définissant ses propriétés dits attributs d'objet. Cette animation peut consister par exemple, en l'affichage d'un petit personnage qui parcourt l'écran de l'afficheur. Dans ce cas, les attributs d'objet peuvent être relatifs à la taille et à la position initiale du personnage, à la direction et au sens de son déplacement, à sa vitesse de déplacement, à sa priorité d'affichage par rapport à d'autres objets, etc...

Pour pouvoir assumer la création et l'animation d'objets, le lecteur 1 de carte à puce est doté en mémoire 141 d'une bibliothèque de programmes objets qui peuvent être, soit installés à demeure et donc résidants, soit importés d'une carte à puce ou d'un système informatique raccordé. L'importation, depuis la carte à puce 1, d'un programme objet peut présenter un intérêt, lorsque la forme de l'objet est spécifique d'une application, comme par exemple le logo du propriétaire de l'application, et que la manipulation de cet objet dépasse les capacités de traitement du microcontrôleur de la carte à puce 1. Ces programmes objets sont appelés par le programme principal de gestion d'application ou par l'un d'entre eux avec des paramètres éventuels dits attributs qui jouent sur la définition ou l'animation de l'objet.

Un objet peut renfermer plusieurs objets ayant des définitions et des animations propres. Il constitue alors une entité dénommée scénario. Un programme scénario organise les rapports entre les objets qu'il renferme dont il entraîne les créations et les animations par appel de leurs programmes objets respectifs. Les rapports entre les différents objets d'un scénario peuvent être soit figés, soit modulables en fonction d'attributs qui accompagnent l'appel du programme du scénario et qui peuvent être des attributs propres au scénario ou des attributs propres aux objets sollicités. Ils peuvent être également statiques ou dynamiques et évoluer dans le temps.

Les attributs d'un objet décrivent ses liens de filiation avec d'autres objets et les objectifs qu'il doit remplir.

Les liens de filiation d'un scénario déterminent l'ordre des objets à enchaîner dans le scénario et éventuellement la composition dynamique d'un ou plusieurs de ses objets, ce qui permet d'adapter l'animation du scénario à une demande évolutive. Les liens de filiation pour un objet autre qu'un scénario déclarent l'ensemble des objets de filiation descendante pouvant constituer l'objet. Dans ce cas, l'objet père reprend à son compte les attributs de chaque objet le composant.

Les objectifs d'un objet déterminent son comportement. Ils sont décrits sous forme de codes d'instructions qui vont interpréter les valeurs fournies par l'environnement du traitement.

La manipulation des objets peut être externe au lecteur de carte à puce, à l'initiative de la carte à puce elle-même, ou interne au lecteur de carte à puce. Elle se fait à la demande du programme de gestion d'une application. Dans le cadre d'une manipulation externe, l'appel d'un programme objet peut se faire avec des attributs incomplets dans la mesure ou une carte à puce ne connaît pas nécessairement de manière complète les caractéristiques du lecteur et de son affichage. Les attributs manquants sont alors complétés, lorsqu'ils sont indispensables, par le lecteur de carte à puce en tenant compte de ses propres possibilités.

Les programmes objets stockés sous forme d'une bibliothèque dans la mémoire du lecteur de carte à puce sont avantageusement standardisés afin d'être exploitables sans difficulté par des programmes de gestion d'application les plus diverses.

## Revendications

1. Lecteur (1) de cartes à puce (2) à interface homme-machine améliorée comportant des moyens (10) de raccordement avec une carte à puce, des moyens de gestion, à l'initiative du lecteur, d'échanges d'informations avec une carte à puce raccordée (2), des moyens d'affichage (11, 12) et de saisie d'informations et un circuit (14) à microcontrôleur (140) et mémoire (141) fonctionnant en logique programmée et assurant l'établissement et la gestion d'une liaison de transmission avec la carte à puce raccordée (2), la gestion des moyens (11, 12) d'affichage et de saisie d'informations, le traitement des informations : données et/ou instructions reçues de la carte à puce raccordée (2) et l'élaboration d'informations : données, instructions ou comptes rendus à destination de la carte à puce raccordée (2), ledit lecteur de carte à puce étant **caractérisé en ce que** son circuit (14) à microcontrôleur (140) et mémoire (141) est pourvu d'un système d'exploitation multitâche, et renferme en mémoire (141) un emplacement pour une bibliothèque de programmes qui définissent des objets visuels et/ou sonores, ou autres, s'affichant sur les moyens d'affichages et qui sont exécutés par le circuit (14) à microcontrôleur (140) et mémoire (141) dudit lecteur (1) sous le contrôle de son système d'exploitation, en arrière plan, sur un appel en provenance d'un programme de gestion de transaction déroulé par la carte à puce raccordée (2).

2. Lecteur de carte à puce selon la revendication 1, **caractérisé en ce que** ladite bibliothèque comportent des programmes définissant des objets visuels, sonores ou autres qui sont résidants en mémoire et d'autres qui sont importés depuis la carte à puce raccordée (2) ou depuis un système informatique relié audit lecteur (1) de carte à puce.

3. Lecteur de carte à puce selon la revendication 1, **caractérisé en ce que** ladite bibliothèque comportent des programmes définissant des objets visuels sonores ou autres standardisés et exploitables sur appel de différents programmes de gestion d'application.

## Patentansprüche

1. Leseeinrichtung (1) für Chipkarten (2) mit verbesserter Mensch-Maschine-Schnittstelle, mit Mitteln (10) für den Anschluß an eine Chipkarte, Mitteln, die auf Initiative der Leseeinrichtung den Informationsaustausch mit einer angeschlossenen Chipkarte (2) steuern, Mitteln (11, 12) zum Anzeigen und Erfassen von Informationen und einer Schaltung (14) mit Mikrocontroller (140) und Speicher (141), die mit programmierter Logik arbeitet und die Herstellung und die Steuerung einer Übertragungsverbindung mit der angeschlossenen Chipkarte (2), die Steuerung der Mittel (11, 12) zum Anzeigen und Erfassen von Informationen, die Verarbeitung von Informationen, d. h. von Daten und/oder Befehlen, die von der angeschlossenen Chipkarte (2) empfangen werden, sowie die Bewertung von Informationen, d. h. von Daten, Befehlen oder Meldungen an die angeschlossene Chipkarte (2), gewährleistet, wobei die Chipkarten-Leseeinrichtung **dadurch gekennzeichnet ist, daß** ihre Schaltung (14) mit Mikrocontroller (141) und Speicher (141) mit einem Multitasking-Betriebssystem versehen ist und im Speicher (141) einen Platz für eine Bibliothek von Programmen enthält, die auf den Anzeigemitteln angezeigte visuelle und/oder akustische Objekte oder anderes definieren und durch die Schaltung (14) mit Mikrocontroller (140) und Speicher (141) der Leseeinrichtung (1) unter der Steuerung ihres Betriebssystems im Hintergrund als Antwort auf einen Aufruf von einem Programm zur Steuerung einer von der angeschlossenen Chipkarte (2) abgewickelten Transaktion ausgeführt werden.

2. Chipkarten-Leseeinrichtung nach Anspruch 1, **dadurch gekennzeichnet, daß** die Bibliothek Programme, die visuelle, akustische oder andere Objekte definieren, die im Speicher resident vorhanden sind, und andere Programme, die von der angeschlossenen Chipkarte (2) oder von einem mit der Chipkarten-Leseeinrichtung (1) verbundenen Datenverarbeitungssystem importiert werden, enthält.

3. Chipkarten-Leseeinrichtung nach Anspruch 1, **dadurch gekennzeichnet, daß** die Bibliothek Programme enthält, die visuelle, akustische oder andere standardisierte Objekte definieren, die als Antwort auf einen Aufruf verschiedener Anwendungssteuerungsprogramme ausführbar sind.

## Claims

1. Reader (1) for IC cards (2) with improved man-machine interface, having means (10) for connection with an IC card, means for managing, at the instigation of the reader, exchanges of information with a connected IC card (2), means (11, 12) for displaying and entering information, and a circuit (14) with microcontroller (140) and memory (141) which operates using programmed logic and establishes and manages a transmission link with the connected IC card (2), manages the means (11, 12) for displaying and entering information, processes the information: data and/or instructions received from the connected IC card (2) and works out information: data, instructions or reports intended for the connected IC card (2), the said IC card reader being **characterized in that** its circuit (14) with microcontroller (140) and memory (141) is provided with a multitask operating system, and contains space in memory (141) for a library of programs which define visual and/or audio, or other objects that are displayed on the display means and are executed by the circuit (14) with microcontroller (140) and memory (141) of the said reader (1) under the supervision of its operating system, in background, in response to a call coming from a transaction management program which is run by the connected IC card (2).

2. IC card reader according to Claim 1, **characterized in that** the said library include programs defining visual, audio or other objects which are resident in memory and others which are imported from the connected IC card (2) or from a computer system connected to the said IC card reader (1).

3. IC card reader according to Claim 1, **characterized in that** the said library include programs defining visual audio or other objects which are standardized and can be utilized in response to a call from various application management programs.
